# FASCICULE DE BREVET EUROPEEN

(11) **EP 1 434 376 B1**
(45) Date de publication et mention de la délivrance du brevet: **19.04.2006**
(21) Numéro de dépôt: 03293232.9
(22) Date de dépôt: 19.12.2003
(51) Int. Cl.: H04J 14/02, H04B 10/17

(54) **Procédé et dispositif de contrôle de la puissance délivrée en sortie d'un noeud d'un réseau optique à commutation de bandes de longueurs d'onde**
Verfahren und Vorrichtung zur Regelung der Ausgangsleistung eines Knotens in einem optischen Wellenlängenkopplungsneztwerk
Method and apparatus for controlling the output power of a node in an optical wavelength-switched network

(30) Priorité: 24.12.2002 FR 0216617
(43) Date de publication de la demande: 30.06.2004
(73) Titulaire: ALCATEL, 75008 Paris (FR)
(72) Inventeur: Faure, Jean-Paul, 75014 Paris (FR); Pain, Franck, 91240 Saint Michel sur Orge (FR)
(74) Mandataire: Fournier, Michel Robert Marie

(56) Documents cités:
- EP-A- 1 035 680
- EP-A- 1 043 859
- EP-A- 1 098 219
- EP-A- 1 176 747
- US-B1- 6 173 093

## Description

L'invention concerne le domaine de la transmission optique de signaux, et plus particulièrement le contrôle de la puissance des signaux optiques introduits dans des fibres optiques en sortie des noeuds de commutation d'un réseau optique du type dit « à commutation de bandes de longueurs d'onde ». ,

Dans les réseaux optiques reconfigurables à commutation de bandes de longueurs d'onde, des effets transitoires induits par des fluctuations de puissance surviennent fréquemment au sein des fibres optiques alimentées par des noeuds (transparents) de commutation. Ces fluctuations ont plusieurs origines.

Tout d'abord, certaines opérations de commutation, effectuées par les noeuds de commutation sur des signaux optiques (longueurs d'onde ou bandes de longueurs d'onde), comme par exemple le re-routage d'une fibre optique vers une autre, le re-routage d'une bande de longueur d'onde d'une fibre vers une autre, l'insertion, l'extraction, ou la réservation de bande, ou encore le remplissage progressif de bande, induisent systématiquement des variations de puissance significatives dans la fibre optique « aval » concernée alimentée par le noeud de commutation opérant, et plus spécifiquement des variations de puissances des autres bandes qui transitent dans ladite fibre aval.

Ensuite, des pannes survenant dans les matrices de commutation équipant les noeuds de commutation optiques induisent généralement une chute de la puissance optique dans la fibre optique aval concernée qui est alimentée par le noeud de commutation optique défaillant.

Enfin, des pannes (coupures partielles ou totales) survenant au niveau des fibres optiques amont, qui alimentent les noeuds de commutation optiques, induisent généralement une importante chute de puissance dans chaque fibre optique aval concernée raccordée au noeud de commutation défaillant.

De plus, toute fluctuation de la puissance optique d'une partie des canaux transportés au niveau d'une fibre optique aval, quelle qu'en soit la cause, influe systématiquement sur l'ensemble des canaux qui sont déjà présents dans ladite fibre optique, en raison du couplage de gain au sein des amplificateurs qui sont placés le long de ladite fibre optique. En particulier, la disparition (ou l'extraction) de certains canaux peut conduire à une augmentation de la puissance optique des autres canaux, et une telle augmentation de puissance peut, au-delà d'un certain seuil, être susceptible de générer des effets non linéaires préjudiciables à la transmission des données sur ces canaux.

Pour tenter de remédier à ces inconvénients, il a été proposé de mesurer les défauts et excès de puissance optique au sein des fibres optiques aval, afin de permettre le maintien de la puissance optique de chaque canal à un niveau sensiblement constant par un ajustement du courant des lasers de pompe situés dans les différents amplificateurs optiques (ou OAs pour « Optical Amplifrers ») de la fibre optique aval. Il a également été proposé d'insérer, en amont des amplificateurs de fibre optique, un canal factice ou canal de bourrage (ou « dummy channel ») généré par un laser continu, émettant une puissance optique à une fréquence donnée, et dénué d'information.

Enfin, la demande de brevet européen EP-A2-1 035 680 propose d'insérer un dispositif de contrôle automatique de gain AGC en amont du multiplexeur de sortie du noeud afin de régler le niveau des signaux dans le noeud de manière à maintenir la puissance de sortie constante.

Cependant, en cas de perte de puissance optique sur un nombre important de canaux optiques (par exemple lors de la disparition complète d'une ou plusieurs bandes), la variation de la puissance optique en sortie des amplificateurs optiques, induite par l'ajustement du courant de pompe des amplificateurs, peut ne pas suffire au maintien de la puissance optique individuelle de chaque canal à un niveau constant. En outre, la modification du courant des lasers de pompe dans les amplificateurs (par exemple de type EDFAs pour « Erbium Doped Fiber Amplifiers ») induit une modification du point de fonctionnement dudit amplificateur, qui se traduit par une augmentation du facteur de bruit NF (pour « Noise Figure ») et une diminution de la platitude du gain de l'amplificateur. Ces deux effets ont pour conséquence d'affecter les performances optiques des canaux traversant l'amplificateur. De plus, si une compensation rapide de puissance optique est requise, l'ajustement du courant de pompe peut induire des sur-dépassements (ou « overshoots ») ou des sous-dépassements (ou « undershoots ») au niveau des amplificateurs placés en aval.

Par ailleurs, les canaux factices sont capables de compenser la perte de puissance optique de plusieurs canaux, voire même d'une bande entière, mais ils ne servent à rien lorsque survient un important sur-dépassement, induit par la brusque augmentation de la puissance optique d'une bande consécutivement à sa commutation.

L'invention a donc pour but de remédier à tout ou partie des inconvénients précités.

Elle propose à cet effet un procédé dédié au contrôle de la puissance de signaux optiques dans un noeud transparent de commutation d'un réseau de communications optique à répartition de bandes de longueurs d'onde, le noeud comprenant des moyens de démultiplexage alimentant en signaux optiques démultiplexés des moyens de commutation, alimentant à leur tour des moyens de multiplexage avec les signaux optiques précédemment démultiplexés.

Ce procédé comporte des étapes consistant, d'une première part, à mesurer la puissance optique dite d'entrée des signaux optiques délivrés sur l'une au moins des sorties des moyens de commutation (et de préférence sur chaque sortie), d'une deuxième part, à comparer chaque mesure de puissance optique d'entrée à un premier seuil choisi afin de délivrer des instructions représentatives du résultat de la comparaison, et d'une troisième part, à contrôler la puissance optique des signaux provenant de la sortie des moyens de commutation (et dirigés vers les entrées des moyens de multiplexage) en fonction des instructions reçues, de sorte que la puissance optique des signaux à l'entrée des moyens de multiplexage soit maintenue sensiblement constante.

Ce contrôle de la puisance, en cas de résultat de comparaison représentatif d'une panne, consiste en ce qu'on alimente ladite entrée desdits moyens de multiplexage avec un niveau de puissance optique auxiliaire, tout en atténuant le niveau de la puissance optique en aval de ladite sortie desdits moyens de commutation, ledit niveau de puissance optique auxiliaire et ladite atténuation étant sinultanément appliqués et choisis pour que ledit niveau de puissance optique auxiliaire contre-balance sensiblement la perte de puissance induite par l'atténuation.

Lorsqu'une commutation de bande (ou de longueur(s) d'onde), avec ou sans insertion, doit être effectuée au niveau des moyens de commutation, il est préférable de commencer par atténuer, de préférence progressivement, la puissance optique en aval de la sortie des moyens de commutation devant délivrer les signaux commutés, tout en alimentant simultanément l'entrée des moyens de multiplexage avec une puissance optique auxiliaire (ou canal de bourrage ou canal factice (ou « dummy channel »)), de sorte que la puissance optique des signaux à l'entrée des moyens de multiplexage soit sensiblement constante. Lorsque la puissance optique, en aval de la sortie des moyens de commutation devant délivrer les signaux commutés, est complètement atténuée, et remplacée intégralement par le canal factice, on procède alors à la commutation, puis on réduit, de préférence progressivement, le niveau d'atténuation de la puissance optique en aval de la sortie des moyens de commutation tout en réduisant simultanément le niveau de puissance optique auxiliaire qui alimente l'entrée des moyens de multiplexage, de sorte que la puissance optique des signaux à l'entrée de ces moyens de multiplexage demeure sensiblement constante.

L'invention permet également de gérer des pannes (ou défaillances) telles que les pannes de commutation et/ou les pannes (ou coupures) sur les fibres optiques amont qui alimentent le noeud. En effet, lorsque le résultat de la comparaison est caractéristique d'une telle panne (par exemple très fort abaissement, voire annulation, de la puissance optique à l'endroit de la mesure), on peut alimenter l'entrée des moyens de multiplexage avec un niveau de puissance optique auxiliaire choisi, tout en atténuant le niveau de la puissance optique en aval de la sortie des moyens de commutation de manière à isoler ces moyens de commutation. Ainsi, la puissance optique des signaux à l'entrée des moyens de multiplexage peut être maintenue sensiblement constante.

Il est préférable de mesurer la puissance optique dite de sortie en amont de l'entrée des moyens de multiplexage, puis de comparer la mesure de puissance optique de sortie à un second seuil choisi de manière à délivrer des instructions auxiliaires représentatives du résultat de la comparaison, et enfin contrôler les niveaux d'atténuation et d'alimentation en puissance optique auxiliaire en fonction de ces instructions auxiliaires pour que la puissance optique des signaux à l'entrée des moyens de multiplexage demeure sensiblement constante.

Par ailleurs, on peut utiliser une source de puissance optique auxiliaire de niveau constant. Mais, dans ce cas, le niveau de puissance optique auxiliaire, qui alimente l'entrée des moyens de multiplexage, est contrôlé par une atténuation auxiliaire qui est elle variable en aval de ladite source

L'invention porte également sur un dispositif dédié au contrôle de la puissance de signaux optiques au sein d'un noeud transparent de commutation d'un réseau de communications optique à répartition de bandes de longueurs d'onde.

Ce dispositif comprend, d'une première part, des moyens de gestion chargés de comparer des mesures de puissance optique dite d'entrée à un premier seuil choisi et de délivrer des instructions représentatives du résultat de la comparaison, d'une deuxième part, des moyens délivrant les mesures représentatives de la puissance optique d'entrée des signaux optiques sur l'une au moins des sorties des moyens de commutation, et d'une troisième part, des moyens de traitement intercalés entre les moyens de commutation et les moyens de multiplexage du noeud et chargés de contrôler la puissance optique des signaux provenant des sorties des moyens de commutation en fonction des instructions reçues, afin que la puissance optique des signaux en sortie du dispositif (et donc à l'entrée des moyens de multiplexage) soit maintenue sensiblement constante.

Selon l'invention, les moyens de traitement comprennent au moins une voie optique raccordable à l'une des sorties des moyens de commutation (et de préférence autant de voies optiques que de sorties des moyens de commutation) et munie de moyens ajustables capables d'atténuer la puissance optique des signaux circulant sur ladite voie optique et de moyens de couplage raccordés, d'une part, à des moyens d'alimentation en puissance optique auxiliaire ajustables (ou canal factice, ou canal de bourrage), et d'autre part, à la voie optique située en aval des moyens d'atténuation de manière à permettre l'insertion de la puissance optique auxiliaire sur cette voie, lesdites moyens d'atténuation ajustables et lesdites moyens d'alimentation en puissance optique auxiliaire ajustables étant commandés simultanément par lesdites moyens de gestion, de sorte que le niveau de ladite puissance optique auxiliaire contre-balance sensiblement la perte de puissance induite par l'atténuation. Dans ce cas, les moyens d'alimentation peuvent comprendre un laser, ou encore une diode électroluminescente dont le spectre d'émission est plus ou moins large, délivrant un canal factice (ou de bourrage) sous une puissance d'un niveau choisi (éventuellement constant).

Lorsque le niveau de puissance optique est délivré par une source de puissance optique auxiliaire d'un niveau constant, par exemple un laser, on prévoit des moyens d'atténuation auxiliaires ajustables, préférentiellement intercalés entre la source et les moyens de couplage, et propres à atténuer ledit niveau de puissance optique auxiliaire de ladite source de façon à contrôler le niveau de puissance optique auxiliaire en fonction des instructions reçues.

Par ailleurs, les moyens de mesures peuvent être également agencés de manière à mesurer la puissance optique des signaux en sortie des moyens de traitement. Dans ce cas, les moyens de gestion sont chargés de comparer les mesures de puissance optique de sortie à un second seuil choisi et de délivrer des instructions auxiliaires représentatives du résultat de la comparaison, et les moyens de traitement sont agencés de manière à contrôler les niveaux d'atténuation et d'alimentation en puissance optique auxiliaire en fonction des instructions auxiliaires reçues, de sorte que la puissance optique des signaux en sortie du dispositif demeure sensiblement constante.

L'invention porte également sur des noeuds transparents de commutation équipés d'au moins un dispositif de contrôle du type de celui présenté ci-avant. Plus préférentiellement, chaque voie optique de liaison du noeud, reliant ses moyens de commutation à ses moyens de multiplexage, est équipée d'un dispositif de contrôle du type de celui présenté ci-avant.

D'autres caractéristiques et avantages de l'invention apparaîtront à l'examen de la description détaillée ci-après, et des dessins annexés sur lesquels :
- la figure 1 illustre de façon schématique le mécanisme de commutation de bandes de longueurs d'onde entre différents noeuds optiques dans une partie d'un réseau transparent à commutation de bandes de longueurs d'onde,
- la figure 2 illustre de façon schématique un noeud optique transparent de commutation de bande de longueurs d'onde équipé d'un dispositif de traitement selon l'invention,
- la figure 3 détaille de façon schématique un exemple de réalisation d'un dispositif de traitement selon l'invention,
- la figure 4 illustre la première partie de l'intervention d'un dispositif selon l'invention dans le cas d'une demande de commutation de bandes de longueurs d'onde au niveau du noeud optique transparent de commutation qu'il équipe,
- la figure 5 illustre la seconde partie de l'intervention d'un dispositif selon l'invention dans le cas d'une demande de commutation de bandes de longueurs d'onde au niveau du noeud optique transparent de commutation qu'il équipe,
- la figure 6 illustre l'intervention d'un dispositif selon l'invention dans le cas d'une détection soit d'une panne de fonctionnement de la matrice de commutation du noeud optique transparent qu'il équipe, soit d'une panne sur l'une des fibres optiques (amont) alimentant ledit noeud.

Ces figures pourront non seulement servir à compléter l'invention, mais aussi contribuer à sa définition, le cas échéant.

Dans un réseau de communications optique à commutation de bandes de longueurs d'onde, qu'il soit du type dit « à multiplexage par répartition de longueurs d'onde » (ou WDM pour « Wavelength Division Multiplexing ») ou du type dit « à multiplexage par répartition dense de longueurs d'onde » (ou DWDM pour « Dense Wavelength Division Multiplexing »), les signaux optiques sont véhiculés grâce au support de canaux associés à des longueurs d'onde différentes et qui se propagent dans des fibres optiques. Ces canaux sont regroupés en bandes de largeur sensiblement constante (généralement) dans lesquelles ils sont sensiblement équidistants (généralement) les uns des autres. Bien entendu, les bandes peuvent être de largeurs différentes et leurs canaux respectifs peuvent être soit espacés régulièrement (de façon identique ou non), soit irrégulièrement.

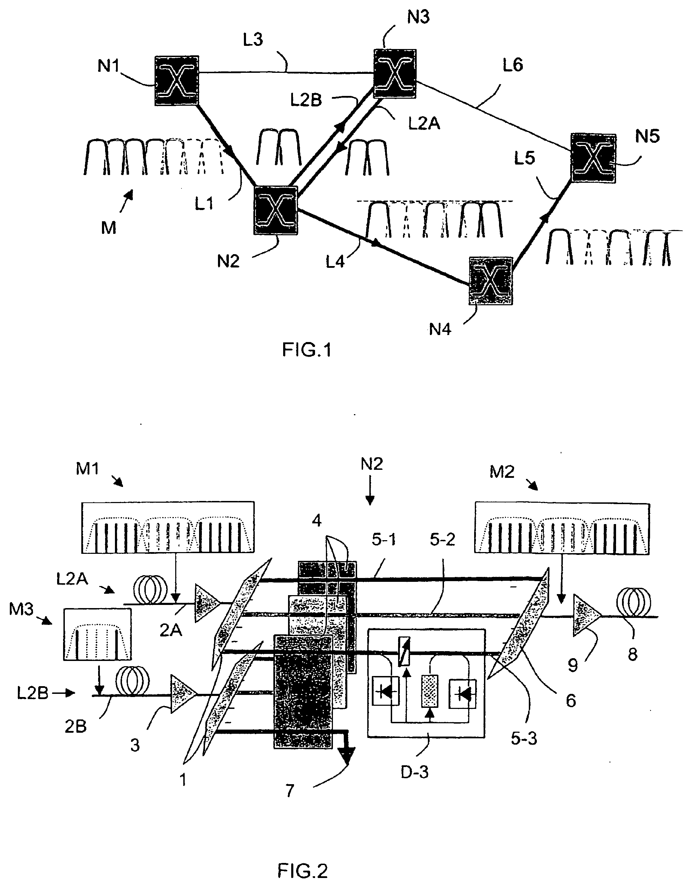

Comme illustré sur la figure 1, ces réseaux comprennent généralement une multiplicité d'équipements de communications Ni (ici i = 1 à 5), également appelés noeuds, reliés entre eux par des lignes de transmission optique Lj (ici j = 1 à 6). Parmi ces noeuds Ni, certains sont chargés d'assurer la commutation et/ou le routage des bandes de longueurs d'onde, avec ou sans insertion et/ou extraction de longueurs d'onde ou de bandes de longueurs d'onde. Ces noeuds de commutation Ni sont généralement appelés brasseurs (ou « cross-connects »).

Une ligne de transmission optique (ou liaison optique) Lj est généralement constituée d'une ou plusieurs sous-portions élémentaires de lignes, ces sous-portions élémentaires étant également appelées « spans » de transmission, chaque « span » comportant une ou plusieurs fibres optiques de transmission couplées à un amplificateur optique dès lors que les pertes de la fibre doivent être compensées, ainsi qu'éventuellement de la fibre à compensation de dispersion et/ou d'autres systèmes permettant l'optimisation de la transmission des canaux sur ladite fibre de transmission.

Dans l'exemple de la figure 1, la portion de réseau illustrée est adaptée à la transmission de multiplex comportant sept bandes de longueurs d'onde comprenant chacune, par exemple, cinq canaux équidistants. Bien entendu, l'invention n'est pas limitée à ce nombre de bandes de longueurs d'onde et à ce nombre de canal par bande.

Dans cet exemple, le noeud N2 reçoit, d'une part, du noeud N1, via la liaison optique L1, un multiplex comportant cinq bandes de longueurs d'onde, et d'autre part, du noeud N3, via la liaison optique L2A, un multiplex comportant deux bandes de longueurs d'onde. Par ailleurs, le noeud N2 doit commuter, d'une part, deux des cinq bandes provenant de N1 vers le noeud N3, via la liaison L2B, et d'autre part, les trois autres bandes provenant de N1 et les deux bandes provenant de N3 vers le noeud N4, via la liaison L4. Enfin, le noeud N4 est chargé de commuter vers le noeud N5 les cinq bandes provenant du noeud N2.

S'il survient un problème de commutation, par exemple au niveau du noeud N2, ou s'il survient une panne au niveau d'une fibre optique d'une liaison, comme par exemple L2B, des effets transitoires induits par des fluctuations de puissance optique vont apparaître dans la fibre optique « aval » concernée de la liaison optique L4. De même, comme exposé dans l'introduction, certaines opérations effectuées sur les signaux optiques au niveau d'un brasseur Ni, comme par exemple le re-routage, l'insertion, l'extraction, la réservation de bande, ou le remplissage progressif de bande, peuvent induire une variation de puissance optique significative dans la fibre optique « aval » concernée, alimentée parce brasseur.

L'invention a pour but d'éviter ces effets transitoires et ces variations de puissance optique dans les fibres optiques (aval) alimentées par les noeuds de commutation ou brasseurs Ni.

Elle propose à cet effet un dispositif de contrôle D destiné à être implanté dans un brasseur Ni du type de celui illustré, schématiquement et partiellement, sur la figure 2.

De façon simplifiée, un brasseur Ni comporte un démultiplexeur 1 dont les entrées sont raccordées aux différentes fibres optiques amont 2 des liaisons entrantes Lj, via des amplificateurs optiques 3, par exemple de type EDFA (pour « Erbium Doped Fiber Amplifier »), et dont les sorties alimentent en signaux démultiplexés les entrées d'une matrice optique de commutation 4. Cette matrice de commutation 4 comporte des sorties qui alimentent des « voies » optiques de liaison 5, raccordées respectivement aux entrées d'un multiplexeur 6, et des sorties 7 d'extraction de bande(s) de longueurs d'onde. Enfin, le multiplexeur 6 alimente une ou plusieurs fibres optiques aval 8, via des amplificateurs optiques de lignes 9, par exemple de type EDFA.

Dans l'exemple illustré, le démultiplexeur 1 est alimenté par deux fibres optiques 2A et 2B, et la matrice de commutation 4 comporte trois sorties d'alimentation des voies optiques de liaison 5-k (ici k = 1 à 3). Mais bien entendu, le brasseur Ni (ici i=2) n'est pas limité à cet exemple de réalisation.

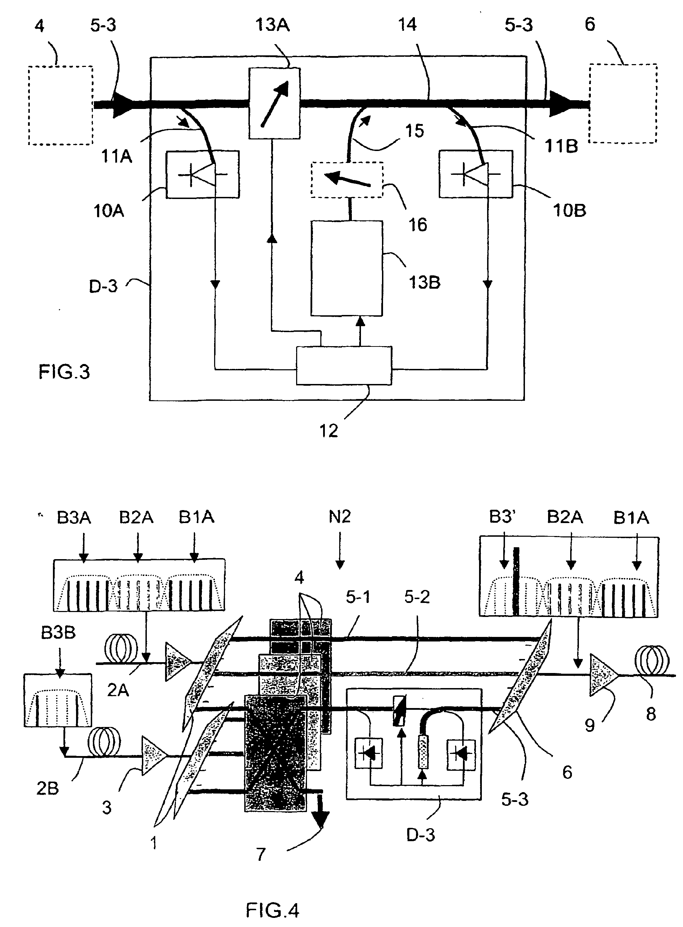

Comme cela est illustré sur la figure 3, le dispositif de contrôle D selon l'invention comporte tout d'abord un premier module de mesure 10A chargé de mesurer la puissance optique des canaux optiques C d'une bande B démultiplexée, délivrée sur l'une au moins des sorties de la matrice de commutation 4. Ces mesures de puissance optique sont dites « d'entrée » dans la mesure où elles sont effectuées à l'entrée du dispositif D.

Dans ce qui suit, et bien que cela ne soit pas représenté sur les figures afin d'éviter une surcharge des dessins, on considère que chaque voie optique de liaison 5-k (avec k = 1,2,3,.. ), reliant une sortie de la matrice de commutation 4 à une entrée du multiplexeur 6, est équipée d'un dispositif de contrôle D-k chargé de contrôler la puissance optique de l'ensemble des canaux optiques de la bande Bk. Cette solution permet d'éviter que d'éventuels effets transitoires ne surviennent entre des signaux associés à des granularités différentes (longueur d'onde ou bande de longueurs d'onde). Mais, il pourrait en être autrement. Ainsi, on pourrait ne prévoir qu'un unique dispositif de contrôle chargé de contrôler toutes les sorties de la matrice de commutation 4 (hormis les sorties d'extraction 7).

Préférentiellement, le premier module de mesure 10A du dispositif D-k comporte une photodiode (ou tout autre système de détection approprié) raccordée via un coupleur 11A à la partie amont de la voie optique de liaison 5-k.

Par ailleurs, il est préférable de prévoir un second module de mesure 10B chargé de mesurer la puissance optique de sortie circulant dans la voie optique de liaison 5-k, sur les différents canaux optiques C d'une bande B démultiplexée et délivrée sur l'une au moins des sorties de la matrice de commutation 4. Ces mesures de puissance optique sont dites « de sortie » dans la mesure où elles sont effectuées à la sortie du dispositif D-k.

Préférentiellement, le second module de mesure 10B du dispositif D-k comporte une photodiode (ou tout autre système de détection approprié) raccordé(e) via un coupleur 11B à une voie optique auxiliaire 14, sur laquelle on reviendra plus loin, cette photodiode (ou ce système de détection approprié) étant elle-même raccordée à la partie aval de la voie optique de liaison 5-k.

Le dispositif D-k comporte également un module de gestion 12 alimenté en mesures de puissance optique d'entrée par la première photodiode 10A, ainsi qu'éventuellement en mesures de puissance optique de sortie par la seconde photodiode 10B. Ce module de gestion 12 est chargé de comparer les mesures de puissance optique d'entrée (et de sortie) respectivement à des premier (et second) seuil(s) choisi(s) et de délivrer des instructions représentatives du résultat de la comparaison.

Le module de gestion 12 peut être réalisé sous la forme de circuits électroniques (ou « hardware »), de modules logiciels ou informatiques (ou « software »), ou d'une combinaison de circuits et de logiciels appropriés.

Enfin, le dispositif D-k comporte un module de traitement 13 intercalé au moins partiellement sur la voie optique de liaison 5-k entre la sortie de la matrice de commutation 4 et l'entrée du multiplexeur 6 et couplé au module de gestion 12. Ce module de traitement 13 est chargé de contrôler la puissance optique des signaux, circulant sur les différents canaux dans la voie optique de liaison 5-k et provenant de la matrice de commutation 4, en fonction des instructions délivrées par le module de gestion 12, de sorte que la puissance optique des signaux en sortie du dispositif D-k soit sensiblement constante.

Comme cela est illustré sur la figure 3, le module de traitement 13 comporte préférentiellement un module d'atténuation 13A, raccordé à la partie amont de la voie optique de liaison 5-k en aval du coupleur 11A et à une voie optique auxiliaire 14, elle-même raccordée à la partie aval de la voie optique de liaison 5-k, et un module d'alimentation 13B, raccordé via un coupleur 15 à la voie optique auxiliaire 14.

Le module d'atténuation 13A est préférentiellement un atténuateur optique variable (ou VOA pour « Variable Optical Attenuator »), capable d'atténuer d'un niveau choisi, voire même d'annuler, en fonction d'instructions reçues du module de gestion 12, la puissance optique de l'ensemble des canaux contenus dans la bande provenant de la sortie concernée de la matrice de commutation 4, avant qu'ils n'empruntent la voie optique auxiliaire 14.

Par ailleurs, le module d'alimentation 13B est préférentiellement un laser, par exemple de type DFB (pour « Distributed Feed-Back »), capable de délivrer une puissance optique auxiliaire (ou complémentaire), sous la forme d'un canal factice (ou canal de bourrage ou encore « dummy channel ») à une fréquence donnée choisie, d'un niveau choisi, destiné à alimenter la partie aval de la voie optique de liaison 5-k, via le coupleur 15 et l'extrémité aval de la voie optique auxiliaire 14. Mais à la place d'un laser on pourrait utiliser une diode électroluminescente dont le spectre d'émission est plus ou moins large.

Le laser 13B peut être à niveau de puissance variable, et dans ce cas, son niveau est choisi en fonction des instructions (ou consignes) reçues du module de gestion 12. Mais, comme cela est matérialisé sur la figure 3 en pointillés, le laser 13B peut être à niveau de puissance constant. Dans ce cas, on prévoit en aval du laser 13B un module d'atténuation auxiliaire 16, par exemple de type VOA, capable d'atténuer d'un niveau choisi, voire même de l'annuler, la puissance optique du canal de bourrage en fonction d'instructions reçues du module de gestion 12. Cela permet de s'affranchir d'éventuels problèmes de verrouillage de fréquence induits par l'activation ou la désactivation rapide du courant de pompe du laser 13B. Préférentiellement, le module d'atténuation auxiliaire 16 est intercalé entre la sortie du laser 13B et le coupleur 15.

Il est également préférable que chaque module d'atténuation 13A ou 16 présente un temps de relaxation sensiblement plus court que celui des amplificateurs aval 9 installés à l'entrée des fibres optiques aval 8, lequel est typiquement de l'ordre de la milliseconde dans le cas d'un EDFA. A cet effet, on pourra par exemple utiliser des atténuateurs reposant sur une technologie à base de MEMs rapides, ou sur des technologies à base de semiconducteurs.

Les modes de fonctionnement d'un dispositif de contrôle D selon l'invention vont maintenant être décrits en référence aux figures 2 et 4 à 6.

On se réfère tout d'abord aux figures 2, 4 et 5 pour décrire un mode de fonctionnement normal correspondant à une demande de commutation de bandes de longueurs d'onde par la matrice optique de commutation 4, par exemple du brasseur N2.

Par exemple, la matrice de commutation 4 doit, d'une part, recevoir de la fibre optique amont 2A un multiplex M1 constitué de trois bandes B1A à B3A et de la fibre optique amont 2B un multiplex M3 constitué d'une bande B3B (regroupant des canaux de mêmes longueurs d'onde que les canaux de la bande B3A), et d'autre part, commuter les bandes B1A, B2A et B3B, via les voies optiques de liaison 5-1, 5-2 et 5-3, vers la fibre optique de sortie 8, pour constituer le multiplex M2, et la bande B3A vers la sortie d'extraction 7.

Avant que la commutation ne soit effectuée, le module de gestion 12 ordonne au module d'atténuation 13A d'augmenter le niveau d'atténuation jusqu'à une valeur choisie. De préférence, cette augmentation s'effectue de façon progressive. Dans le même temps, le module de gestion 12 ordonne au laser 13B (on considère ici que le laser est à niveau variable) d'augmenter le niveau du canal de bourrage jusqu'à une valeur choisie. De préférence, cette augmentation s'effectue également de façon progressive mais concomitante par rapport à l'atténuation précédente, de manière à contre-balancer sensiblement constamment la perte de puissance optique induite par l'augmentation du niveau d'atténuation.

Par exemple, le niveau d'atténuation choisi correspond à un blocage complet des signaux au niveau de la partie amont de la voie optique de liaison 5-3 et par l'alimentation de la partie aval de cette voie optique de liaison 5-3 par le canal de bourrage d'une bande de fréquence B3'. Ces niveaux sont fixés par le module de gestion 12 à partir des mesures de puissance optique d'entrée qui lui sont délivrées par le premier module de mesure 10A.

Le résultat de cette double opération (blocage amont/alimentation de bourrage) est matérialisé sur la figure 4 par la bande B3' qui alimente la fibre optique aval 8. Comme on peut le constater, cette bande B3' est constituée d'un unique canal dont le niveau de puissance est choisi de manière à compenser l'absence des cinq canaux que comprend normalement une bande B3.

Les amplificateurs aval 9 étant alors protégés des fluctuations de puissance optique au niveau de leur entrée, la matrice de commutation est autorisée à se reconfigurer de manière à effectuer les opérations de commutation précitées. Comme cela est illustré sur la figure 4, pendant cette phase de reconfiguration, les états respectifs du module d'atténuation 13A et du laser 13B sont inchangés.

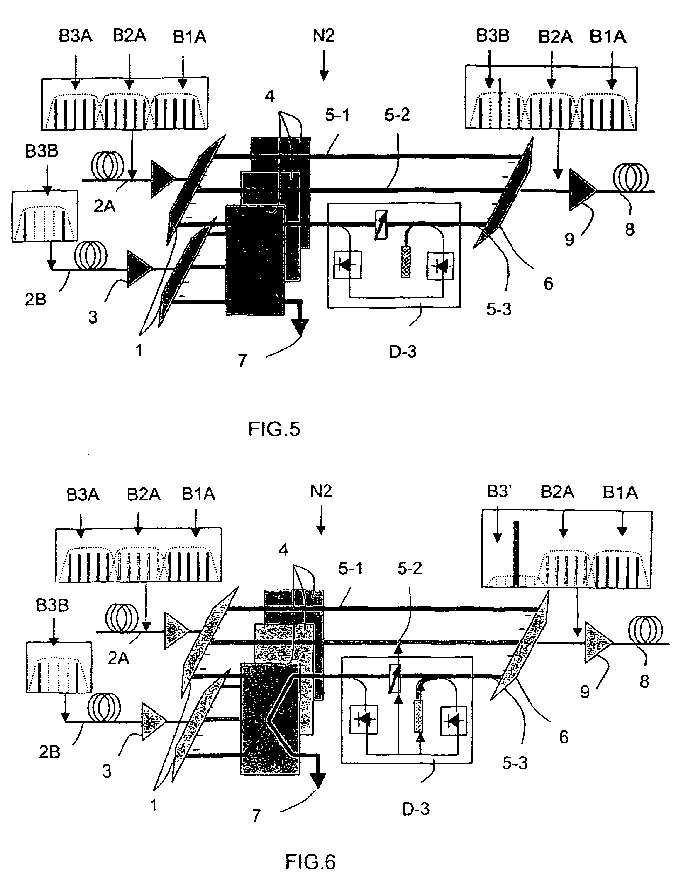

Une fois que les opérations de commutation ont été effectuées, la puissance optique, à l'entrée du dispositif D-3, des signaux, circulant ici sur les deux canaux d'extrémité de la bande B3B, est stabilisée. Le module de gestion 12 ordonne alors au module d'atténuation 13A de diminuer, de préférence progressivement, le niveau d'atténuation, tandis que dans le même temps il ordonne au laser 13B de diminuer, de préférence progressivement, le niveau de puissance du canal de bourrage de la bande B3'. Le niveau d'atténuation est préférentiellement réduit à son minimum (valeur nulle), tandis que le niveau du canal de bourrage est choisi en fonction du nombre de canaux occupés dans la bande B3B, de manière à ce que la puissance optique en sortie du dispositif D-3 demeure sensiblement constante. Ce nombre étant ici égal à deux, le laser 13B continue par conséquent à délivrer un canal de bourrage compensant l'absence des trois autres canaux. Bien entendu, si les cinq canaux de la bande B3B commutée étaient occupés, le niveau du canal de bourrage délivré par le laser 13B serait nul. Le résultat de cette seconde partie de la phase de commutation est matérialisé sur la figure 5.

Dans ce qui précède, il n'a pas été fait référence au second module de mesure 10B, qui permet de constituer dans le dispositif D-k une boucle de contre-réaction. Lorsqu'un tel module est prévu, il délivre en permanence au module de gestion 12 ses mesures représentatives de la puissance optique en sortie du dispositif D-k, et plus précisément en sortie de sa voie optique auxiliaire 14, de sorte que ledit module de gestion 12 puisse ajuster les consignes (via les instructions) transmises au module d'atténuation 13A et au laser 13B (ou au module d'atténuation auxiliaire 16). Cet ajustement s'effectue tout d'abord par une comparaison de chaque mesure de puissance optique de sortie à un second seuil choisi, puis par la délivrance d'instructions auxiliaires représentatives du résultat de la comparaison.

On se réfère maintenant à la figure 6 pour décrire un mode de fonctionnement anormal correspondant à une panne (ou une coupure) survenue au niveau d'une fibre optique amont 2A ou 2B et/ou dans une partie de la matrice de commutation 4, par exemple celle qui alimente la voie optique de liaison 5-3.

Dans ce cas, les mesures de la puissance optique d'entrée, délivrées par le premier module de mesure 10A, permettent au module de gestion 12 de détecter la panne. Il adresse alors au module d'atténuation 13A et au laser 13B des instructions (consignes) de sorte qu'ils compensent conjointement la perte de puissance optique détectée, induite par ladite panne.

Comme pour la première partie de la phase de commutation, le module de gestion 12 ordonne simultanément au module d'atténuation 13A d'augmenter le niveau d'atténuation jusqu'à une valeur choisie et au laser 13B (on considère ici que le laser est à niveau variable) d'augmenter le niveau de puissance optique du canal de bourrage jusqu'à une valeur choisie, de manière à ce que la puissance optique du canal de bourrage contre-balance exactement la perte de puissance optique induite par la panne.

De préférence, le niveau d'atténuation choisi correspond à un blocage complet de l'ensemble des signaux au niveau de la partie amont de la voie optique de liaison 5-3, et par l'alimentation de la partie aval de cette voie optique de liaison 5-3 par le canal de bourrage dont la fréquence est située à l'intérieur d'une bande de fréquence B3'. Ces niveaux sont fixés par le module de gestion 12 à partir des mesures de puissance optique d'entrée qui lui sont délivrées par le premier module de mesure 10A. Ils peuvent être ajustés par la boucle de contre-réaction lorsque le dispositif D-3 est équipé d'un second module de mesure 10B.

Les amplificateurs aval 9 sont ainsi protégés, au niveau de leur entrée, des fluctuations de puissance optique de la bande B3 pendant toute la durée de la panne.

Le résultat de cette double opération (blocage amont/alimentation de bourrage) est matérialisé sur la figure 6 par la bande B3' qui alimente la fibre optique aval 8. Comme on peut le constater, cette bande B3' est constituée d'un unique canal dont le niveau de puissance est choisi de manière à compenser l'absence des cinq canaux que comprend normalement une bande B3.

Le dispositif de contrôle peut fonctionner soit en boucle fermée de façon totalement indépendante, soit en boucle ouverte et être couplé, par exemple, à des mesures de rapport signal sur bruit (ou OSNR pour « Optical Signal to Noise Ratio ») et/ou de puissance réalisées en début, milieu, ou fin de fibre aval par exemple au moyen d'OPM (« Optical Power (ou Performance) Monitor »). Le contrôle de puissance optique peut également être réalisé en couplage avec des égaliseurs de gain actifs (ou AGE pour « Active Gain Equalizer ») situés par exemple dans l'inter-étage des amplificateurs de la ligne aval.

L'invention offre également un procédé de contrôle de la puissance de signaux optiques dans un noeud de commutation (par exemple un brasseur) Ni d'un réseau de communications optique à commutation de bandes de longueurs d'onde.

Celui-ci peut être mis en oeuvre à l'aide d'au moins un dispositif de contrôle et d'un noeud de commutation du type de ceux présentés ci-avant. Les fonctions et sous-fonctions principales et optionnelles assurées par les étapes de ce procédé étant sensiblement identiques à celles assurées par les différents moyens constituant le dispositif de contrôle et le noeud, seules seront résumées ci-après les étapes mettant en oeuvre les fonctions principales du procédé selon l'invention.

Ce procédé consiste, d'une première part, à mesurer la puissance optique dite d'entrée des signaux optiques sur l'une au moins des sorties du module de commutation 4 (et de préférence sur chaque sortie), d'une deuxième part, à comparer chaque mesure de puissance optique d'entrée à un premier seuil choisi afin de délivrer des instructions représentatives du résultat de la comparaison, et d'une troisième part, à contrôler la puissance optique des signaux provenant de la sortie du module de commutation 4 en fonction des instructions reçues, de sorte que la puissance optique des signaux à l'entrée des moyens de multiplexage 6 soit maintenue sensiblement constante.

Grâce à l'invention, il est ainsi possible d'effectuer du re-routage inter-fibre, de l'insertion, de l'extraction, de la réservation de bande, ou du remplissage progressif de bande sans que cela n'induise de variation de puissance optique significative dans une fibre optique « aval » alimentée par un noeud de commutation.

Par ailleurs, grâce à l'invention il est possible de pallier les manques de puissance optique induits dans les fibres optiques « aval », alimentées par un noeud optique transparent de commutation, par des pannes survenant dans la matrice de commutation dudit noeud optique transparent, et/ou dans les fibres optiques amont qui l'alimentent.

L'invention ne se limite pas aux modes de réalisation de procédé, dispositif de contrôle D et de noeud de commutation Ni décrits ci-avant, seulement à titre d'exemple, mais elle englobe toutes les variantes que pourra envisager l'homme de l'art dans le cadre des revendications ci-après.

## Revendications

1. Procédé de contrôle de la puissance de signaux optiques dans un noeud transparent de commutation (Ni) d'un réseau de communications optique à répartition de bandes de longueurs d'onde, ledit noeud (Ni) comprenant des moyens de démultiplexage (1) alimentant en signaux optiques démultiplexés des moyens de commutation (4), alimentant à leur tour des moyens de multiplexage (6) avec lesdits signaux optiques précédemment démultiplexés, ledit procédé comportant des étapes qui consistent i) à mesurer la puissance optique dite d'entrée des signaux optiques sur l'une au moins des sorties desdits moyens de commutation (4), ii) à comparer ladite mesure de puissance optique d'entrée à un premier seuil choisi de manière à délivrer des instructions représentatives du résultat de ladite comparaison, et iii) à contrôler la puissance optique des signaux provenant de ladite sortie des moyens de commutation (4) en fonction desdites instructions reçues, de sorte que la puissance optique des signaux à l'entrée desdits moyens de multiplexage (6) soit maintenue sensiblement constante, **caractérisé en ce qu'**en cas de demande de commutation de bande(s) de longueurs d'ondes au niveau desdits moyens de commutation (4), ou en cas de résultat de comparaison représentatif d'une panne, on alimente ladite entrée desdits moyens de multiplexage (6) avec un niveau de puissance optique auxiliaire, tout en atténuant le niveau de la puissance optique en aval de ladite sortie desdits moyens de commutation (4), ledit niveau de puissance optique auxiliaire et ladite atténuation étant simultanément appliqués et choisis pour que ledit niveau de puissance optique auxiliaire contre-balance sensiblement la perte de puissance induite par l'atténuation.

2. Procédé selon la revendication 1, **caractérisé en ce que** dans le cas de demande de commutation de bande(s) de longueurs d'ondes on procède ensuite à ladite commutation, et on réduit le niveau d'atténuation de la puissance optique en aval de ladite sortie desdits moyens de commutation (4) tout en réduisant simultanément le niveau de puissance optique auxiliaire alimentant ladite entrée desdits moyens de multiplexage (6), de sorte que la puissance optique des signaux à l'entrée desdits moyens de multiplexage (6) demeure sensiblement constante.

3. Procédé selon la revendication 2, **caractérisé en ce que** l'on atténue progressivement la puissance optique et l'on fait croître progressivement ledit niveau de puissance auxiliaire.

4. Procédé selon l'une des revendications 2 ou 3, **caractérisé en ce que** l'on mesure une puissance optique dite « de sortie » en amont de l'entrée desdits moyens de multiplexage (6), puis l'on compare ladite mesure de puissance optique de sortie à un second seuil choisi de manière à délivrer des instructions auxiliaires représentatives du résultat de ladite comparaison, et l'on contrôle les niveaux d'atténuation et d'alimentation en puissance optique auxiliaire en fonction desdites instructions auxiliaires, de sorte que la puissance optique des signaux à l'entrée desdits moyens de multiplexage (6) soit sensiblement constante.

5. Procédé selon la revendication l'une des revendications 1 à 4, **caractérisé en ce qu'**en cas d'utilisation d'une source de puissance optique auxiliaire d'un niveau constant, le niveau de puissance optique auxiliaire est contrôlé par une atténuation auxiliaire variable en aval de ladite source.

6. Dispositif (D-3) de contrôle de la puissance de signaux optiques pour un noeud transparent de commutation (Ni) d'un réseau de communications optique à répartition de bandes de longueurs d'onde, ledit noeud (Ni) comprenant des moyens de commutation (4) propres à être alimentés en signaux optiques démultiplexés par des moyens de démultiplexage (1) et à alimenter en signaux démultiplexés des moyens de multiplexage (6), ce dispositif comprenant i) des moyens de gestion (12) agencés pour comparer des mesures de puissance optique dite d'entrée à un premier seuil choisi et délivrer des instructions représentatives du résultat de ladite comparaison, ii) des moyens de mesure (10A,10B) propres à mesurer la puissance optique d'entrée des signaux optiques sur l'une au moins des sorties desdits moyens de commutation (4), et iii) des moyens de traitement (13) intercalable au moins partiellement entre lesdits moyens de commutation (4) et lesdits moyens de multiplexage (6) et agencés pour contrôler la puissance optique des signaux provenant desdits moyens de commutation (4) en fonction desdites instructions reçues, de sorte que la puissance optique des signaux à l'entrée desdits moyens de multiplexage (6) soit maintenue sensiblement constante, ledit dispositif étant **caractérisé en ce que** lesdits moyens de traitement (13) comprennent au moins une voie optique (14) raccordée à l'une des sorties desdits moyens de commutation (4) et comportant des moyens d'atténuation ajustables (13A) propres à atténuer la puissance optique des signaux circulant sur ladite voie et des moyens de couplage (15) raccordés, d'une part, à des moyens d'alimentation en puissance optique auxiliaire ajustables (13B), et d'autre part, à ladite voie optique (14) en aval desdits moyens d'atténuation (13A) de manière à permettre l'insertion de ladite puissance optique auxiliaire dans ladite voie optique (14), lesdits moyens d'atténuation ajustables (13A) et lesdits moyens d'alimentation en puissance optique auxiliaire ajustables (13B) étant commandés simultanément par lesdits moyens de gestion (12) de sorte que le niveau de ladite puissance optique auxiliaire contre-balance sensiblement la perte de puissance induite par l'atténuation.

7. Dispositif selon la revendication 6, **caractérisé en ce que** lesdits moyens d'alimentation (138) comprennent un laser propre à délivrer un canal factice sous une puissance d'un niveau choisi.

8. Dispositif selon l'une des revendications 6 ou 7, **caractérisé en ce que** lesdits moyens de mesures (10B) sont agencés pour mesurer la puissance optique dite de sortie des signaux en sortie desdits moyens de traitement (13).

9. Dispositif selon la revendication 8, **caractérisé en ce que** lesdits moyens de gestion (12) sont agencés pour comparer des mesures de puissance optique de sortie à un second seuil choisi et délivrer des instructions auxiliaires représentatives du résultat de ladite comparaison, et **en ce que** lesdits moyens de traitement (13) sont agencés pour contrôler les niveaux d'atténuation et d'alimentation en puissance optique auxiliaire respectivement des moyens d'atténuation (13A) et des moyens d'alimentation (13B) en fonction desdites instructions auxiliaires reçues, de sorte que la puissance optique des signaux à l'entrée desdits moyens de multiplexage (6) soit sensiblement constante.

10. Dispositif selon l'une des revendications 6 à 9, **caractérisé en ce que** lesdits moyens d'alimentation (13B) comportent une source de puissance optique auxiliaire d'un niveau constant, et **en ce que** lesdits moyens de traitement comprennent des moyens d'atténuation auxiliaires ajustables (16) propres à atténuer ledit niveau de puissance optique auxiliaire de ladite source en fonction desdites instructions reçues.

11. Noeud transparent de commutation (Ni) pour un réseau de communications optique à répartition de bandes de longueurs d'onde, comprenant des moyens de commutation (4) propres à être alimentés en signaux optiques démultiplexés et à alimenter par des voies optiques de liaison (5-k) des moyens de multiplexage (6), **caractérisé en ce qu'**il comprend au moins un dispositif de contrôle (D) selon l'une des revendications 6 à 10 couplé auxdites voies optiques de liaison (5-k).

12. Noeud transparent de commutation (Ni) selon la revendication 11, **caractérisé en ce que** chaque voie optique de liaison (5-k) est couplée à un dispositif de contrôle (D-k).

## Patentansprüche

1. Verfahren zur Regelung der Leistung optischer Signale in einem transparenten Koppelknoten (Ni) eines optischen Kommunikationsnetzwerks mit Wellenlängenbänderaufteilung, wobei dieser Knoten (Ni) Demultiplexiermittel (1) enthält, welche Koppelmittel (4) mit gedemultiplexten optischen Signalen versorgen, diese Mittel wiederum Multiplexierungsmittel (6) mit diesen zuvor gedemultiplexten optischen Signalen versorgen, wobei dieses Verfahren Schritte beinhaltet, die darin bestehen i) die so genannte optische Eingangsleistung der optischen Signale an mindestens einem der Ausgänge dieser Koppelmittel (4) zu messen, ii) diese Messung der optischen Eingangsleistung mit einem gewählten ersten Schwellenwert zu vergleichen, so dass Anweisungen geliefert werden, die für das Ergebnis dieses Vergleichs repräsentativ sind, und iii) die optische Leistung der von diesem Ausgang der Koppelmittel (4) kommenden Signale in Abhängigkeit von diesen erhaltenen Anweisungen zu regeln, so dass die optische Leistung der Signale am Eingang dieser Multiplexierungsmittel (6) etwa konstant gehalten wird, **dadurch gekennzeichnet, dass** im Falle einer Wellenlängenband(bänder)kopplungsanforderung auf der Ebene dieser Koppelmittel (4) oder im Falle eines für eine Störung repräsentativen Vergleichsergebnisses man diesen Eingang dieser Multiplexierungsmittel (6) mit einem optischen Hilfsleistungspegel versorgt, wobei gleichzeitig der Pegel der optischen Leistung unterhalb dieses Ausgangs dieser Koppelmittel (4) gedämpft wird, wobei dieser optische Hilfsleistungspegel und diese Dämpfung gleichzeitig angewandt und gewählt werden, damit dieser optische Hilfsleistungspegel den durch die Dämpfung induzierten Leistungsverlust etwa ausgleicht.

2. Verfahren gemäß Anspruch 1, **dadurch gekennzeichnet, dass** man im Falle einer Wellenlängenband(bänder)kopplungsanforderung dann diese Kopplung vornimmt, und das Dämpfungsniveau der optischen Leistung unterhalb dieses Ausgangs dieser Koppelmittel (4) verringert, wobei jedoch gleichzeitig der optische Hilfsleistungspegel, welcher diesen Eingang dieser Multiplexierungsmittel (6) versorgt, gesenkt wird, so dass die optische Leistung der Signale am Eingang dieser Multiplexierungsmittel (6) etwa konstant bleibt.

3. Verfahren gemäß Anspruch 2, **dadurch gekennzeichnet, dass** man die optische Leistung allmählich dämpft und diesen Hilfsleistungspegel allmählich anhebt.

4. Verfahren gemäß einem der Ansprüche 2 oder 3, **dadurch gekennzeichnet, dass** man eine so genannte optische "Ausgangs"-Leistung oberhalb des Eingangs dieser Multiplexierungsmittel (6) misst, man dann diese Messung der Ausgangsleistung mit einem zweiten gewählten Schwellenwert vergleicht, so dass Hilfsanweisungen geliefert werden, die für das Ergebnis dieses Vergleichs repräsentativ sind, und den Dämpfungspegel und den Pegel der Versorgung mit optischer Hilfsleistung in Abhängigkeit von diesen Hilfsanweisungen regelt, so dass die optische Leistung der Signale am Eingang dieser Multiplexierungsmittel (6) etwa konstant ist.

5. Verfahren gemäß einem der Ansprüche 1 bis 4, **dadurch gekennzeichnet, dass** im Falle der Nutzung einer optischen Hilfsleistungsquelle mit einem konstanten Pegel der optische Hilfsleistungspegel durch eine variable Hilfsdämpfung unterhalb dieser Quelle geregelt wird.

6. Vorrichtung (D-3) zur Regelung der Leistung optischer Signale für einen transparenten Koppelknoten (Ni) eines optischen Kommunikationsnetzwerks mit Wellenlängenbänderaufteilung, wobei dieser Knoten (Ni) Koppelmittel (4) beinhaltet, die für die Versorgung mit gedemultiplexten optischen Signalen durch Demultiplexierungsmittel (1) geeignet sind und geeignet sind, Multiplexierungsmittel (6) mit gedemultiplexten Signalen zu versorgen, wobei diese Vorrichtung Folgendes enthält: i) Verwaltungsmittel (12), die angelegt sind, um Messungen der so genannten optischen Eingangsleistung mit einem ersten gewählten Schwellenwert zu vergleichen und Anweisungen zu liefern, die repräsentativ für das Ergebnis dieses Vergleichs sind, ii) Messmittel (10A, 10B), die geeignet sind, die optische Eingangsleistung der optischen Signale an mindestens einem der Ausgänge dieser Koppelmittel (4) zu messen, und iii) Verarbeitungsmittel (13), die zumindest teilweise zwischen diese Koppelmittel (4) und diese Multiplexierungsmittel (6) zwischengeschaltet werden können und angelegt sind, um die optische Leistung der von diesen Koppelmitteln (4) kommenden Signale in Abhängigkeit von diesen erhaltenen Anweisungen zu regeln, so dass die optische Leistung der Signale am Eingang dieser Multiplexierungsmittel (6) etwa konstant gehalten wird, wobei diese Vorrichtung **dadurch gekennzeichnet ist, dass** diese Verarbeitungsmittel (13) mindestens einen optischen Kanal (14) beinhalten, der an einen der Ausgänge dieser Koppelmittel (4) angeschlossen ist und regulierbare Dämpfungsmittel (13A) beinhaltet, die geeignet sind, die optische Leistung der Signale zu dämpfen, welche auf diesem Kanal zirkulieren, und Koppelmittel (15), die angeschlossen sind zum einen an regulierbare Mittel (13B) zur Versorgung mit optischer Hilfsleistung, und zum anderen an diesen optischen Kanal (14) unterhalb dieser Dämpfungsmittel (13A), so dass das Einsetzen dieser optischen Hilfsleistung in diesen optischen Kanal (14) möglich wird, wobei diese regulierbaren Dämpfungsmittel (13A) und diese regulierbaren Mittel zur Versorgung mit optischer Hilfsleistung (13B) gleichzeitig durch diese Verwaltungsmittel (12) gesteuert werden, so dass der Pegel dieser optischen Hilfsleistung den durch die Dämpfung induzierten Leistungsverlust etwa ausgleicht.

7. Vorrichtung gemäß Anspruch 6, **dadurch gekennzeichnet, dass** diese Mittel zur Versorgung (13B) einen Laser beinhalten, der geeignet ist, einen Pseudokanal unter einer Leistung mit einem gewählten Pegel zu liefern.

8. Vorrichtung gemäß einem der Ansprüche 6 oder 7, **dadurch gekennzeichnet, dass** diese Messmittel (10B) angelegt sind, um die so genannte optische Ausgangsleistung der Signale am Ausgang dieser Verarbeitungsmittel (13) zu messen.

9. Vorrichtung gemäß Anspruch 8, **dadurch gekennzeichnet, dass** diese Verwaltungsmittel (12) angelegt sind, um Messungen der optischen Ausgangsleistung mit einem zweiten gewählten Schwellenwert zu vergleichen und Hilfsanweisungen zu liefern, die für das Ergebnis dieses Vergleichs repräsentativ sind, und **dadurch gekennzeichnet, dass** diese Verarbeitungsmittel (13) angelegt sind, um das Dämpfungsniveau und das Versorgungsniveau betreffend die optische Hilfsleistung der Dämpfungsmittel (13A) beziehungsweise der Versorgungsmittel (13B) in Abhängigkeit von diesen erhaltenen Hilfsanweisungen zu regeln, so dass die optische Leistung der Signale am Eingang dieser Multiplexierungsmittel (6) etwa konstant ist.

10. Vorrichtung gemäß einem der Ansprüche 6 bis 9, **dadurch gekennzeichnet, dass** diese Versorgungsmittel (13B) eine optische Hilfsleistungsquelle mit konstantem Niveau beinhalten, und **dadurch gekennzeichnet, dass** diese Verarbeitungsmittel regulierbare Hilfsdämpfungsmittel (16) beinhalten, die geeignet sind, diesen optischen Hilfsleistungspegel dieser Quelle in Abhängigkeit von diesen erhaltenen Anweisungen zu dämpfen.

11. Transparenter Koppelknoten (Ni) für ein optisches Kommunikationsnetzwerk mit Wellenlängenbänderaufteilung, welches Koppelmittel (4) beinhaltet, die für die Versorgung mit gedemultiplexten optischen Signalen geeignet sind und geeignet sind, über optische Verbindungskanäle (5-k) Multiplexierungsmittel (6) zu versorgen, **dadurch gekennzeichnet, dass** mindestens eine Vorrichtung zur Regelung (D) gemäß einem der Ansprüche 6 bis 10 enthalten ist, die an diese optischen Verbindungskanäle gekoppelt ist.

12. Transparenter Koppelknoten (Ni) gemäß Anspruch 11, **dadurch gekennzeichnet, dass** jeder optische Verbindungskanal (5-k) an eine Vorrichtung zur Regelung (D-k) gekoppelt ist.

## Claims

1. A method of controlling the power of optical signals in a transparent switching node (Ni) of an optical communication network that switches bands of wavelengths, said node (Ni) comprising demultiplexing means (1) for feeding demultiplexed optical signals to switching means (4) for feeding in turn said already demultiplexed optical signals to multiplexing means (6), said method comprising the steps of i) measuring the input optical power of the optical signals at one output at least one of said switching means (4), ii) comparing the measured input optical power to a selected first threshold so as to generate instructions representative of the result of said comparison, and iii) controlling the optical power of the signals coming from said switching means (4) as a function of the instructions received, so that the optical power of the signals at the input of said multiplexing means (6) is maintained substantially constant, which method is **characterized in that** in the event of a request for said switching means (4) to switch bands of wavelengths or in the event of a comparison result representative of a fault, the input of said multiplexing means (6) is fed with an auxiliary optical power and the optical power downstream of the output of said switching means (4) is attenuated, said auxiliary optical power and said attenuation being applied simultaneously, and selected so that said auxiliary optical power substantially counterbalances the power loss induced by the attenuation.

2. A method according to claim 1, **characterized in that**, in the event of a request to switch bands of wavelengths, said switching is effected and the attenuation of the optical power downstream of the output of said switching means (4) is reduced whilst at the same time the auxiliary optical power feeding said input of said multiplexing means (6) is reduced, so that the optical power of the signals at the input of said multiplexing means (6) remains substantially constant.

3. A method according to claim 2, **characterized in that** said optical power is attenuated progressively and said auxiliary power is increased progressively.

4. A method according to either claim 2 or claim 3, **characterized in that** an "output" optical power is measured upstream of the input of said multiplexing means (6), the measured output optical power is then compared to a selected second threshold in order to deliver auxiliary instructions representative of the comparison result, and the attenuation and the auxiliary optical power are controlled as a function of said auxiliary instructions, so that the optical power of the signals at the input of said multiplexing means (6) remains substantially constant.

5. A method according to any one of claims 1 to 4, **characterized in that**, if an auxiliary optical power source of constant level is used, the auxiliary optical power is controlled by variable auxiliary attenuation downstream of said source.

6. A device (D-3) for controlling the power of optical signals in a transparent switching node (Ni) of an optical communication network that switches bands of wavelengths, said node (Ni) comprising demultiplexing means (1) for feeding demultiplexed optical signals to switching means (4) for feeding demultiplexed optical signals to multiplexing means (6) and said device comprising i) control means (12) for comparing input optical power measurements to a selected first threshold and generating instructions representative of the comparison result, ii) measuring means (10A, 10B) for measuring the input optical power of the optical signals at at least one output of said switching means (4), and iii) processing means (13) which can be interposed at least in part between said switching means (4) and said multiplexing means (6) and which control the optical power of the signals coming from said switching means (4) as a function of the instructions received, so that the optical power of the input signals of said multiplexing means (6) is maintained substantially constant, which device is **characterized in that** said processing means (13) comprise at least one optical channel (14) connected to one of the outputs of said switching means (4) and comprising variable attenuation means (13A) for attenuating the optical power of the signals on said channel and coupling means (15) connected to variable auxiliary optical power feeding means (13B) and to said optical channel (14) downstream of said attenuation means (13A) to insert said auxiliary optical power into said optical channel (14), said variable attenuation means (13A) and said variable auxiliary optical power feeding means (13B) being controlled simultaneously by said control means (12), so that said auxiliary optical power substantially counterbalances the power loss induced by the attenuation.

7. A device according to claim 6, **characterized in that** said feeding means (13B) comprise a laser which delivers a dummy channel at a selected power.

8. A device according to claim 6, **characterized in that** said measuring means (10B) measure the output optical power of the signals at the output of said processing means (13).

9. A device according to claim 8, **characterized in that** said control means (12) are adapted to compare output optical power measurements with a selected second threshold and generate auxiliary instructions representative of the comparison result and said processing means (13) are adapted to control the attenuation and the auxiliary optical power of the attenuation means (13A) and the feeding means (13B), respectively, as a function of the auxiliary instructions they receive, so that the optical power of the signals at the input of said multiplexing means (6) is substantially constant.

10. A device according to any one of claims 6 to 9, **characterized in that** said feeding means (13B) comprise a constant level auxiliary optical power source and said processing means comprise variable auxiliary attenuation means (16) adapted to attenuate the auxiliary optical power from said source as a function of the instructions received.

11. A transparent switching node (Ni) for an optical communication network that switches bands of wavelengths, said node comprising switching means (4) adapted to be fed with demultiplexed optical signals and to feed multiplexing means (6) via connection optical channels (5-k), **characterized in that** it comprises at least one control device (D) according to any one of claims 6 to 10 connected to said connection optical channels (5-k).

12. A transparent switching node (Ni) according to claim 11, **characterized in that** each connection optical channel (5-k) is connected to a control device (D-k).
